# EUROPEAN PATENT APPLICATION

(11) **EP 4 102 866 A1**
(43) Date of publication of application: **14.12.2022**
(21) Application number: 20917420.0
(22) Date of filing: 06.02.2020
(51) Int. Cl.: H04W 4/44, H04W 4/46, H04W 28/04

(54) **TERMINAL AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/004690
(87) International publication number: WO 2021/157041

(57) **Abstract**

A terminal includes a control unit configured to determine, in a case where a first transmission of transmitting an HARQ (Hybrid Automatic Repeat Request) response received from another terminal to a base station overlaps in ate least in a time domain with a second transmission to a base station, at least one of a priority and a priority order, of each transmission, and to determine control associated with the first transmission and the second transmission, based on the priorities, and a transmission unit configured to perform the control associated with the first transmission and the second transmission, based on the determination, and the control unit changes control associated with determination of priority order of transmissions, based on a configuration associated with communication.

## Description

### TECHNICAL FIELD

The present invention relates to a terminal and a communication method in a radio communication system.

### BACKGROUND ART

In LTE (Long Term Evolution) and a successor system of the LTE (for example, LTE-A (LTE-Advanced) and NR (New Radio) (which is also referred to as 5G)), D2D (Device to Device) techniques where terminals perform direct communication with each other without involving a base station are discussed (for example, non-patent document 1).

The D2D reduces traffic between terminals and base stations, and even if the base stations are unable to perform communications in the event of disasters, the D2D enables communication between the terminals. Note that although the D2D is referred to as "sidelink" in 3GPP (3^{rd} Generation Partnership Project), the D2D is used as a more generic terminology in the present specification. However, the sidelink may be used in descriptions of embodiments as stated below if necessary.

The D2D communication is roughly divided into: D2D discovery for discovering other terminals capable of communication; and D2D communication (also referred to as direct communication between terminals or the like) for direct communication between terminals. In the following, when the D2D communication, the D2D discovery or the like are not particularly distinguished, they are simply referred to as D2D. Also, signals transmitted and received in the D2D are referred to as D2D signals. Various use cases of services associated with V2X (Vehicle to Everything) in the NR are being discussed (for example, non-patent document 2).

### [Related Art Document]

### [Non-Patent Document]

[Non-Patent Document 1] 3GPP TS 36.211 V15.8.1 (2020-01)
[Non-Patent Document 2] 3GPP TR 22.886 V15.1.0 (2017-03)

### SUMMARY OF INVENTION

### [PROBLEM TO BE SOLVED BY THE INVENTION]

In the inter-terminal direct communication in the NR, it is not stipulated as to how a terminal performs operations associated with transmission if an uplink transmission carrying an HARQ (Hybrid Automatic Repeat Request) and other uplink transmissions overlap with each other at least in a time domain.

In the light of the above problem, the present invention aims to determine, if multiple transmissions overlap, operations associated with the transmissions in a radio communication system.

### [MEANS FOR SOLVING THE PROBLEM]

According to a technique disclosed herein, there is provided a terminal, comprising: a control unit that if a first transmission for transmitting an HARQ (Hybrid Automatic Repeat Request) response received from another terminal to a base station overlaps with a second transmission to a base station at least in a time domain, determines at least one of priorities of respective transmissions and prioritization and determines control associated with the first transmission and the second transmission based on the priorities; and a transmission unit that performs control associated with transmission of the first transmission and the second transmission based on the determination, wherein the control unit changes control associated with determination of prioritization of transmissions based on a configuration associated with communication.

### [ADVANTAGE OF THE INVENTION]

According to the disclosed technique, it is possible to determine, if multiple transmissions overlap, operations associated with the transmissions in a radio communication system.

### BRIEF DESCRIPTION OF DRAWINGS

FIG. 1 is a diagram illustrating V2X;
FIG. 2 is a diagram illustrating an example (1) of a transmission mode of the V2X;
FIG. 3 is a diagram illustrating an example (2) of a transmission mode of the V2X;
FIG. 4 is a diagram illustrating an example (3) of a transmission mode of the V2X;
FIG. 5 is a diagram illustrating an example (4) of a transmission mode of the V2X;
FIG. 6 is a diagram illustrating an example (5) of a transmission mode of the V2X;
FIG. 7 is a diagram illustrating an example (1) of a communication type of the V2X;
FIG. 8 is a diagram illustrating an example (2) of a communication type of the V2X;
FIG. 9 is a diagram illustrating an example (3) of a communication type of the V2X;
FIG. 10 is a sequence diagram illustrating an operation example (1) of the V2X;
FIG. 11 is a sequence diagram illustrating an operation example (2) of the V2X;
FIG. 12 is a sequence diagram illustrating an operation example (3) of the V2X;
FIG. 13 is a sequence diagram illustrating an operation example (4) of the V2X;
FIG. 14 is a flowchart illustrating an example transmission operation according to an embodiment of the present invention;
FIG. 15 is a diagram illustrating a priority order according to an embodiment of the present invention;
FIG. 16 is a flowchart illustrating an operation example (1) associated with determination of the priority order according to an embodiment of the present invention;
FIG. 17 is a flowchart illustrating an operation example (2) associated with determination of the priority order according to an embodiment of the present invention;
FIG. 18 is a diagram illustrating an example functional configuration of a base station 10 according to an embodiment of the present invention;
FIG. 19 is a diagram illustrating an example functional arrangement of a terminal 20 according to an embodiment of the present invention; and
FIG. 20 is a diagram illustrating an example hardware configuration of the base station 10 or the terminal 20 according to an embodiment of the present invention.

### EMBODIMENTS OF THE INVENTION

Hereinafter, embodiments of the present invention will be described with reference to the drawings. The embodiments described below are merely examples, and embodiments to which the present invention is applied are not limited to the following embodiments.

In operations of a radio communication system of an embodiment of the present invention, conventional techniques are used as needed. Note that the conventional techniques are conventional LTE, for example, but are not limited to the conventional LTE. Also, unless specifically stated otherwise, it should be appreciated that the terminology "LTE" used herein has a broader meaning including LTE-Advanced, its subsequent schemes (e.g., NR) or a wireless LAN (Local Area Network).

In addition, in the embodiment of the invention, a duplexing scheme may be Time Division Duplexing (TDD), may be Frequency Division Duplexing (FDD), or may be other schemes (for example, Flexible Duplexing or the like).

Also, in embodiments of the present invention, "configuring" a radio parameter or the like may mean that a predetermined value is pre-configured or that a radio parameter indicated by the base station 10 or the terminal 20 is configured.

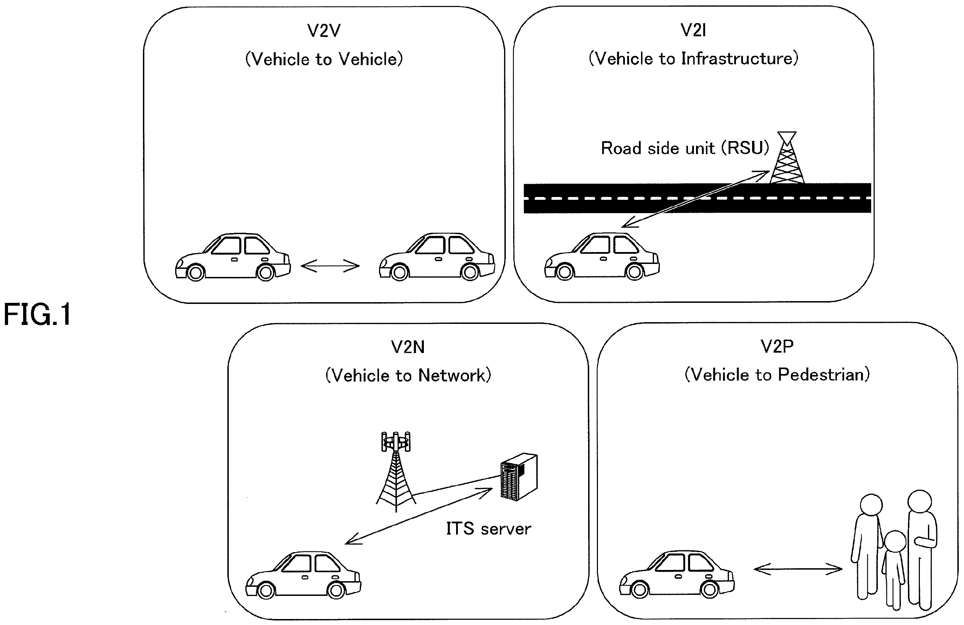

FIG. 1 is a diagram illustrating V2X. In 3GPP, it is considered that V2X (Vehicle to Everything) or eV2X (enhanced V2X) are implemented through enhancement of D2D functions, and the specifications are being developed. As illustrated in FIG. 1, the V2X is a part of ITS (Intelligent Transport Systems) and is a collective term for V2V (Vehicle to Vehicle), which means the form of communication between vehicles, V2I (Vehicle to Infrastructure), which means the form of communication between a vehicle and an RSU (Road-Side Unit) located at a roadside, V2N (Vehicle to Network), which means the form of communication between a vehicle and an ITS server, and V2P (Vehicle to Pedestrian), which means the form of communication between a vehicle and a mobile terminal carried by a pedestrian.

Also, V2X utilizing cellular communication and inter-terminal communication of LTE or NR is being discussed in the 3GPP. The V2X utilizing cellular communication may be referred to as cellular V2X. In the V2X of the NR, implementations of large capacity, low delay, high reliability, and QoS (Quality of Service) control are discussed.

It is expected that discussions of V2X of LTE or NR are not limited to the 3GPP specifications in the future. For example, it is expected that interoperability, cost reduction by implementation of an upper layer, combination or switching manner of multiple RATs (Radio Access Technology), regulatory compliance in respective countries, data acquisition, distribution, database management and use of V2X platforms of LTE or NR will be discussed.

In embodiments of the present invention, a communication device is mainly assumed to be installed in a vehicle, the embodiments of the present invention are not limited to those embodiments. For example, the communication device may be a terminal carried by a person, a device installed in a drone or an aircraft, a base station, an RSU, a relay node, a terminal having scheduling capabilities and so on.

Note that a SL (Sidelink) may be differentiated from an UL (Uplink) or a DL (Downlink), based on one of, or combinations of, 1) to 4) below. Also, the SL may be referred to as other names.
1) Resource arrangement of a time domain
2) Resource arrangement of a frequency domain
3) Synchronization signal to be referenced (including SLSS (Sidelink Synchronization Signal))
4) Reference signal used for pathloss measurement for transmit power control

Also, regarding OFDM (Orthogonal Frequency Division Multiplexing) of the SL or the UL, any of CP-OFDM (Cyclic-Prefix OFDM), DFT-S-OFDM (Discrete Fourier Transform-Spread-OFDM), OFDM without transform precoding or OFDM with transform precoding may be applied. Also, the SL may be operated under a multicarrier environment.

In the SL of the LTE, Mode 3 and Mode 4 regarding SL resource allocation to a terminal 20 are defined. In Mode 3, transmission resources are dynamically allocated by DCI (Downlink Control Information) transmitted from a base station 10 to the terminal 20. Also, SPS (Semi Persistent Scheduling) is enabled in Mode 3. In Mode 4, the terminal 20 autonomously selects transmission resources from a resource pool.

Note that a slot according to an embodiment of the present invention may be replaced with a symbol, a mini-slot, a subframe, a radio frame or a TTI (Transmission Time Interval) . Also, a cell according to an embodiment of the present invention may be replaced with a cell group, a carrier component, a BWP, a resource pool, a resource, a RAT (Radio Access Technology), a system (including a wireless LAN) or the like.

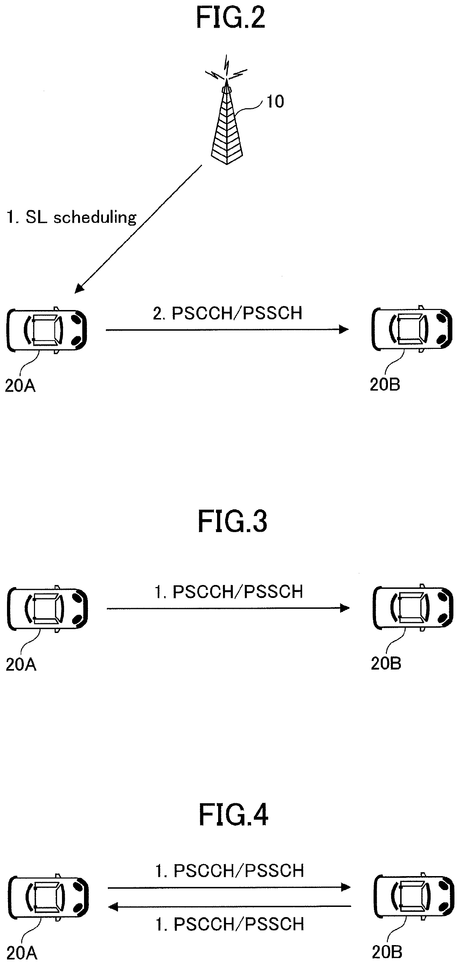

FIG. 2 is a diagram illustrating an example (1) of a transmission mode for the V2X. In the transmission mode for sidelink communication illustrated in FIG. 2, at step 1, the base station 10 transmits a scheduling for a sidelink to the terminal 20A. Then, the terminal 20A transmits a PSCCH (Physical Sidelink Control Channel) and a PSSCH (Physical Sidelink Shared Channel) to the terminal 20B based on the received scheduling (step 2). The transmission mode of the sidelink communication illustrated in FIG. 2 may be referred to as sidelink transmission mode 3 for the LTE. In the sidelink transmission mode 3 for the LTE, Uu based sidelink scheduling is performed. The Uu means a radio interface between a UTRAN (Universal Terrestrial Radio Access Network) and a UE (User Equipment). Note that the transmission mode for the sidelink communication illustrated in FIG. 2 may be referred to as sidelink transmission mode 1 for the NR.

FIG. 3 is a diagram illustrating an example (2) of a transmission mode for the V2X. In the transmission mode for the sidelink communication illustrated in FIG. 3, at step 1, the terminal 20A uses autonomously selected resource to transmit a PSCCH and a PSSCH to the terminal 20B. The transmission mode for the sidelink communication illustrated in FIG. 3 may be referred to as sidelink transmission mode 4 for the LTE. In sidelink transmission mode 4 for the LTE, the UE itself performs resource selection.

FIG. 4 is a diagram illustrating an example (3) of a transmission mode for the V2X. In a transmission mode for the sidelink communication illustrated in FIG. 4, at step 1, the terminal 20A uses an autonomously selected resource to transmit a PSCCH and a PSSCH to the terminal 20B. Analogously, the terminal 20B uses an autonomously selected resource to transmit a PSCCH and a PSSCH to the terminal 20A (step 1). The transmission mode for the sidelink communication illustrated in FIG. 4 may be referred to as sidelink transmission mode 2a for the NR. In the sidelink transmission mode 2 for the NR, the terminal 20 itself performs resource selection.

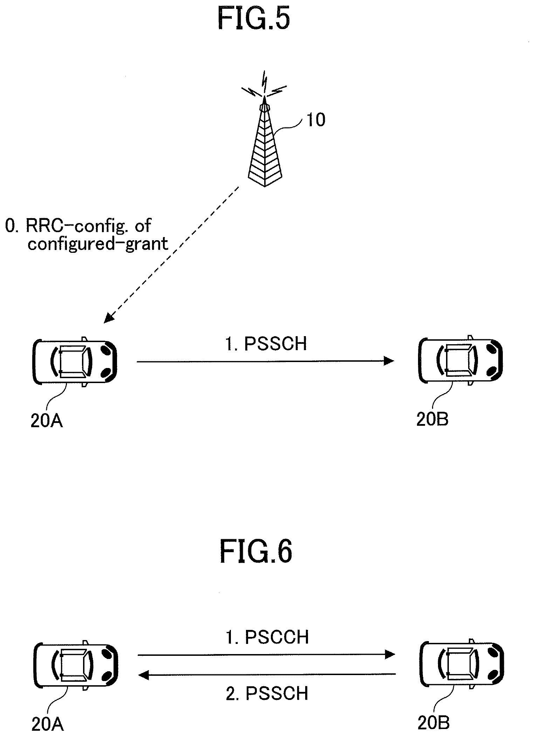

FIG. 5 is a diagram illustrating an example (4) of a transmission mode for the V2X. In the transmission mode for the sidelink communication illustrated in FIG. 5, at step 0, the base station 10 transmits a sidelink grant to the terminal 20A via an RRC (Radio Resource Control) configuration. Then, the terminal 20A transmits a PSSCH to the terminal 20B via received resource pattern (step 1). The transmission mode for the sidelink communication illustrated in FIG. 5 may be referred to as sidelink transmission mode 2c for the NR.

FIG. 6 is a diagram illustrating an example (5) of a transmission mode for the V2X. In a transmission mode for the sidelink communication illustrated in FIG. 6, at step 1, the terminal 20A transmits a sidelink scheduling to the terminal 20B via a PSCCH. Then, the terminal 20B transmits a PSSCH to the terminal 20A based on the received scheduling (step 2). The transmission mode for the sidelink communication illustrated in FIG. 6 may be referred to as sidelink transmission mode 2d for the NR.

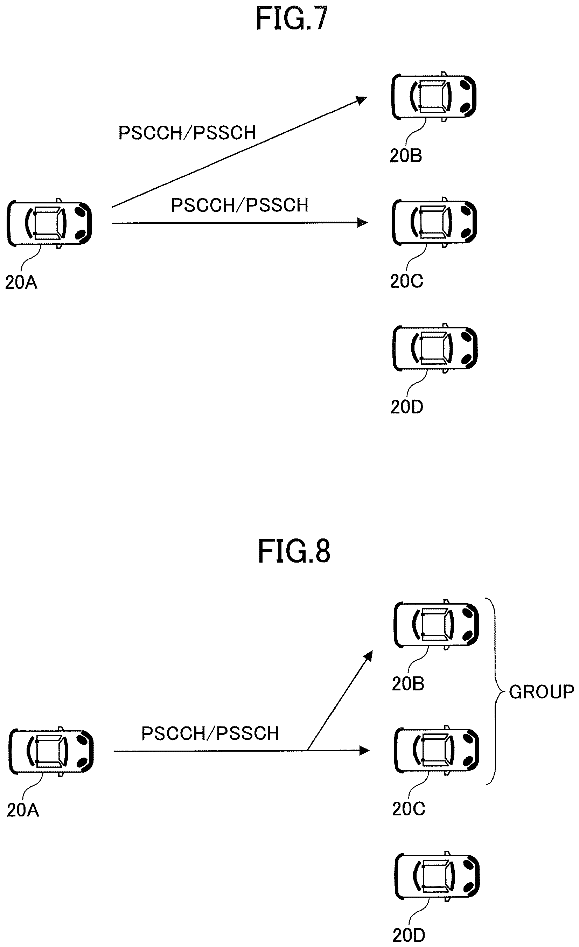

FIG. 7 is a diagram illustrating an example (1) of a communication type of the V2X. The sidelink communication type illustrated in FIG. 7 is a unicast. The terminal 20A transmits a PSCCH and a PSSCH to the terminal 20. In the example illustrated in FIG. 7, the terminal 20A performs unicast for the terminal 20B and also performs a unicast for the terminal 20C.

FIG. 8 is a diagram illustrating an example (2) of a communication type for the V2X. The sidelink communication type illustrated in FIG. 8 is a group cast. The terminal 20A transmits a PSCCH and a PSSCH to a group to which one or more terminals 20 belong. In the example illustrated in FIG. 8, the group includes the terminals 20B and 20C, and the terminal 20A performs a group cast to the group.

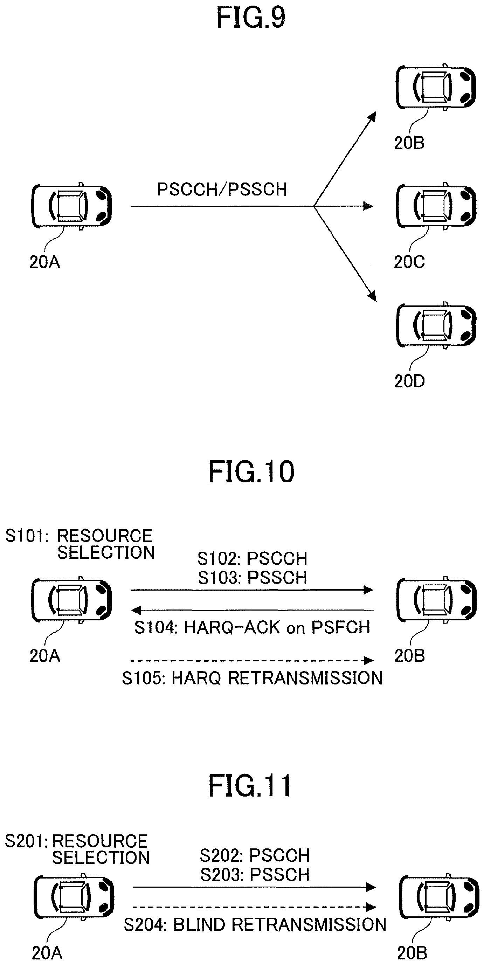

FIG. 9 is a diagram illustrating an example (3) of a communication type for the V2X. The sidelink communication type illustrated in FIG. 9 is a broadcast. The terminal 20A transmits a PSCCH and a PSSCH to one or more terminals 20. In the example illustrated in FIG. 9, the terminal 20A performs a broadcast to the terminals 20B, 20C and 20D. Note that the terminal 20A illustrated in FIGS. 7 to 9 may be referred to as a header UE.

Also, it is assumed in NR-V2X that a HARQ (Hybrid Automatic Repeat Request) is supported for the sidelink unicast and group cast. In addition, SFCI (Sidelink Feedback Control Information) including a HARQ response is defined in the NR-V2X. In addition, the transmission of SFCI via PSFCH (Physical Sidelink Feedback) is being discussed..

Although the PSFCH is used for sidelink transmission of a HARQ-ACK in descriptions below, it is merely an example. For example, a PSCCH may be used to transmit the sidelink HARQ-ACK, a PSSCH may be used to transmit the sidelink HARQ-ACK or other channels may be used to transmit the sidelink HARQ-ACK.

In the following, information reported by the terminal 20 in HARQs is referred to as the HARQ-ACK in general for convenience. The HARQ-ACK may be referred to as HARQ-ACK information. Also, more specifically, a codebook applied to the HARQ-ACK information reported from the terminal 20 to the base station 10 or the like is referred to as a HARQ-ACK codebook. The HARQ-ACK codebook specifies bit sequences of the HARQ-ACK information. Note that not only ACK but also NACK is transmitted in the HARQ-ACK.

FIG. 10 is a diagram illustrating an example (1) of arrangement and operation of a radio communication system according to an embodiment of the present invention. As illustrated in FIG. 10, the radio communication system according to an embodiment of the present invention has terminals 20A and 20B. Note that although large numbers of user equipment are present in the real world, terminals 20A and 20B are exemplarily illustrated in FIG. 10.

In the following, if the terminals 20A, 20B and the like are not particularly distinguished, they are simply described as "terminal 20" or "user equipment". Although the case where both the terminals 20A and 20B are within a coverage of a cell is illustrated in FIG. 10, the operation according to an embodiment of the present invention may be also applied to the case where the terminal 20B is out of the coverage.

As stated above, in the present embodiment, the terminal 20 is a device installed in a vehicle such as a car, for example, and has cellular communication functions and sidelink functions as a UE in the LTE or the NR. The terminal 20 may be a conventional mobile terminal (such as a smartphone) . Also, the terminal 20 may be a RSU. The RSU may be a UE type of RSU having UE functions or gNB type of RSU having functions of a base station apparatus.

Note that the terminal 20 is not necessarily a device of a single housing, and in a case where various sensors are distributed and installed in a vehicle, for example, the terminal 20 may be a device including those sensors.

Also, processing contents at the terminal 20 for sidelink transmission data are basically similar to those for UL transmission in the LTE or the NR. For example, the terminal 20 scrambles and modulates a codeword of transmission data to generate complex-valued symbols and maps the complex-valued symbols (transmission signal) to one or two layers for precoding. Then, the terminal 20 maps the precoded complex-valued symbols to a resource element to generate a transmission signal (for example, a complex-valued time-domain SC-FDMA signal), and performs transmission from each antenna port.

Note that the base station 10 has cellular communication functions to serve as a base station for the LTE or the NR, and functions (for example, resource pool configuration, resource allocation or the like) that enable communication with the terminal 20 according to the present embodiment. Also, the base station 10 may be an RSU (a gNB type of RSU).

Also, a signal waveform utilized by the terminal 20 in the SL or the UL in the radio communication system according to an embodiment of the present invention, may be OFDMA, SC-FDMA or others.

At step S101, the terminal 20A autonomously selects a resource used for a PSCCH and a PSSCH from a resource selection window having a predetermined period. The resource selection window may be configured to the terminal 20 by the base station 10.

At steps S102 and S103, the terminal 20A uses the resource autonomously selected at step S101 to transmit SCI (Sidelink Control Information) in a PSCCH and SL data in a PSSCH. For example, the terminal 20A may use a time resource that is the same as a time resource of the PSSCH, and a frequency resource that is adjacent to a frequency resource of the PSSCH, to transmit the SCI (PSCCH).

The terminal 20B receives the SCI (PSCCH) and the SL data (PSSCH) transmitted from the terminal 20A. The SCI received in the PSCCH may include PSFCH resource information used by the terminal 20B for transmitting a HARQ-ACK in response to reception of the data. The terminal 20A may include information of an autonomously selected resource in the SCI, and transmit the SCI.

At step S104, the terminal 20B uses the PSFCH resource indicated by the received SCI, to transmit the HARQ-ACK for the received data, to the terminal 20A.

At step S105, if the HARQ-ACK received at step S104 indicates a request for retransmission, that is, if it is a NACK (negative response), the terminal 20A retransmits the PSCCH and PSSCH to the terminal 20B. The terminal 20A may use the autonomously selected resource to retransmit the PSCCH and PSSCH.

Note that if the HARQ control is not performed, steps S104 and S105 need not be performed.

FIG. 11 is a diagram illustrating an example (2) of arrangement and operation of the radio communication system according to an embodiment of the present invention. Blind retransmission that does not rely on the HARQ control, may be performed so as to improve a transmission success rate or a reachable distance.

At step S201, the terminal 20A autonomously selects a resource to be used for a PSCCH and a PSSCH, from a resource selection window having a predetermined period. The resource selection window may be configured to the terminal 20 by the base station 10.

At steps S202 and S203, the terminal 20A uses the resource autonomously selected at step S201 to transmit SCI via the PSCCH and SL data via the PSSCH. For example, the terminal 20A may use a time resource that is the same as a time resource of the PSSCH, and a frequency resource that is adjacent to a frequency resource of the PSSCH, to transmit the SCI (PSCCH).

At step S204, the terminal 20A uses the resource autonomously selected at step S201 to retransmit the SCI via the PSCCH and the SL data via the PSSCH to the terminal 20B. The retransmission at step S204 may be performed multiple times .

Note that if the blind retransmission is not performed, step S204 need not be performed.

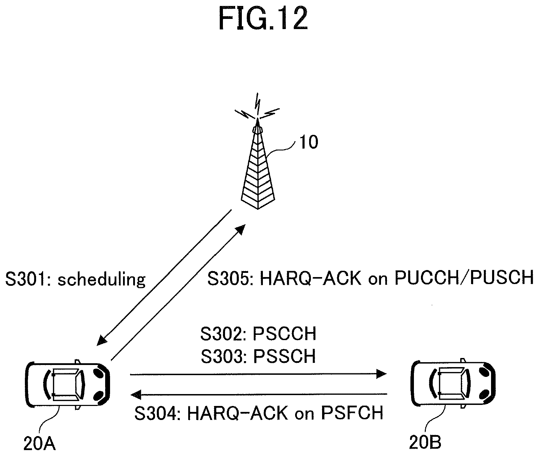

FIG. 12 is a diagram illustrating an example (3) of arrangement and operation of the radio communication system according to an embodiment of the present invention. The base station 10 may perform sidelink scheduling. That is, the base station 10 may determine a resource to be used for sidelink by the terminal 20, and transmit information indicative of the resource to the terminal 20. In addition, if the HARQ control is applied, the base station 10 may transmit information indicative at least one of a PSFCH resource and a PUCCH resource to the terminal 20.

At step S301, the base station 10 performs an SL scheduling for the terminal 20A by transmitting DCI (Downlink Control Information) in a PDCCH. Hereinafter, for convenience, the DCI for the SL scheduling is referred to as SL scheduling DCI.

Also, at step S301, it is assumed that the base station 10 also transmits the DCI for a DL scheduling (may be referred to as DL allocation) in the PDCCH. Hereinafter, for convenience, the DCI for the DL scheduling is referred to as DL scheduling DCI. Upon receiving the DL scheduling DCI, the terminal 20A uses a resource indicated by the DL scheduling DCI to receive DL data in a PDSCH.

At steps S302 and S303, the terminal 20A uses a resource indicated by the SL scheduling DCI to transmit SCI (Sidelink Control Information) in a PSCCH and SL data in a PSSCH. Note that only a resource of the PSSCH may instead be indicated by the SL scheduling DCI. In this case, for example, the terminal 20A may use a time resource that is same as a time resource of the PSSCH, and a frequency resource that is adjacent to a frequency resource of the PSSCH, to transmit the SCI (PSCCH) . Note that the SCI may be transmitted via at least one of the PSCCH and the PSSCH.

The terminal 20B receives the SCI (PSCCH) and SL data (PSSCH) transmitted from the terminal 20A. The SCI received in the PSCCH includes information regarding a resource of a PSFCH for transmitting a HARQ-ACK in response to reception of the data from the terminal 20B.

The information regarding the resource may be included in the DL scheduling DCI or the SL scheduling DCI transmitted from the base station 10 at step S301, and the terminal 20A may acquire the information regarding the resource from the DL scheduling DCI or the SL scheduling DCI, and the terminal 20A may include the acquired information in the SCI. Alternatively, the information regarding the resource need not be included in the DCI transmitted from the base station 10, and the terminal 20A may autonomously include the information regarding the resource in the SCI, and transmit the SCI.

At step S304, the terminal 20B uses a resource of the PSFCH indicated by the received SCI to transmit to the terminal 20A a HARQ-ACK in response to the received data.

At step S305, the terminal 20A transmits the HARQ-ACK at a timing (for example, a timing in unit of slot) indicated by the DL scheduling DCI (or the SL scheduling DCI), by using a PUCCH (Physical Uplink Control Channel) resource indicated by the DL scheduling DCI (or the SL scheduling DCI), and the base station 10 receives the HARQ-ACK. A codebook of the HARQ-ACK may include: the sidelink HARQ-ACK; and the HARQ-ACK in response to DL data. Note that the HARQ-ACK in response to the DL data need not be included in the case where, for example, no DL data is allocated.

Note that the sidelink HARQ-ACK and the HARQ-ACK for DL data are not included in the same HARQ-ACK codebook in NR Rel-16. Also, the "sidelink HARQ-ACK" may mean an HARQ-ACK corresponding to a sidelink channel and or resource. More specifically, for example, the base station 10 performs scheduling for the terminal 20A, and the terminal 20A transmits a transport block to the terminal 20B in a PSCCH/PSSCH. The terminal 20B performs feedback for the terminal 20A for transmission of the transport block in the PSCCH/PSSCH and based on the feedback, provides a feedback to the base station 10 in the HARQ-ACK. For example, the terminal 20A may relay an HARQ-ACK ((ACK: acknowledgement) or (NACK:
negative-acknowledgement)) received from the terminal 20B to the base station 10.

Note that if HARQ control is not performed, steps S304 and S305 need not be performed.

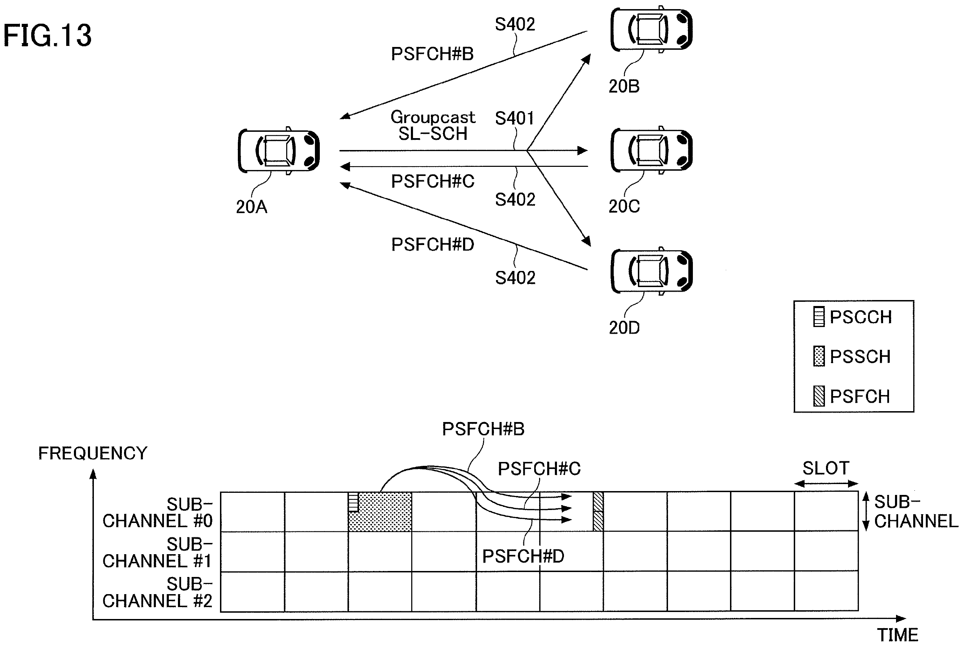

FIG. 13 is a diagram illustrating an operation example (4) according to an embodiment of the present invention. As stated above, transmission of the HARQ response via the PSFCH is supported in the NR sidelink. Note that a format similar to PUCCH (Physical Uplink Control Channel) format 0 is available as the PSFCH format. In other words, in the PSFCH format, the PRB (Physical Resource Block) size is equal to 1, and the ACK and the NACK may be a sequence based format that can be differentiated based on the sequence difference. The PSFCH format is not limited to the above. A resource of the PSFCH may be placed at the last symbol of a slot, or at multiple symbols at the end of a slot. Also, the cycle N may be configured for the PSFCH resource, or may be specified in advance. The cycle N may be configured or specified in advance, in unit of slot.

In FIG. 13, the vertical axis corresponds to a frequency domain, and the horizontal axis corresponds to a time domain. The PSCCH may be placed at first symbol of a slot, at multiple symbols from the first symbol of a slot, or at multiple symbols from a symbol other than the first symbol of a slot. The PSFCH may be placed at the last symbol of a slot, or at multiple symbols at the end of a slot. In the example illustrated in FIG. 13, three sub-channels are configured in a resource pool, and the two PSFCHs are placed at the third slot from a slot where the PSSCH is placed. The arrows from the PSSCH to the PSFCHs shows examples of the PSFCHs associated with the PSSCH.

If the HARQ response in NR-V2X group cast is option 2 of transmitting the ACK or NACK, a resource used for transmission and reception of the PSFCH must be determined. As illustrated in FIG. 13, at step S401, the terminal 20A serving as the transmitting terminal 20 performs group cast to the terminals 20B, 20C and 20D serving as the receiving terminals 20, via an SL-SCH. Then, at step S402, the terminal 20B, 20C and 20D use a PSFCH#B, a PSFCH#C, and a PSFCH#D, respectively, to transmit the HARQ responses to the terminal 20A. Here, as illustrated in the example in FIG. 13, if the number of available PSFCH resources is less than the number of receiving terminals 20 belonging to a group, how to allocate the PSFCH resources must be determined. Note that the transmitting terminal 20 may acquire the number of receiving terminals 20 in the group cast.

Here, in a case where an uplink transmission carrying a sidelink HARQ (Hybrid automatic repeat request) feedback illustrated at step S305 in FIG. 12 overlaps with another uplink transmission in a time domain, NR Rel 16 does not support multiplexing the UL transmission of an SL-HARQ-ACK and a Uu-UCI (The Radio interface between UTRAN and the User Equipment-Uplink Control Information) into a PUCCH or a PUSCH to be transmitted. Hereinafter, "overlap" corresponds to overlapping of resources mainly in a time domain, but "overlap" may correspond to overlapping of resources in at least one of a time domain, a frequency domain or a code domain. Note that "overlap" may be replaced with "contention".

With respect to the above, in a case where UL transmission of an SL-HARQ-ACK overlaps with a Uu-UCI, multiplexing is not performed as described above, and UE operations are not clear in this case. Also, UE operations are not specified for a case in which UL transmission of an SL-HARQ-ACK overlaps with a PUSCH including no Uu-UCI, a PRACH or an SRS. Therefore, the UE operations need to be specified for a case in which UL transmission of an SL-HARQ-ACK overlaps with another UL transmission.

The priority order of UL transmission of an SL-HARQ-ACK and another UL transmission in the NR may be determined, and operations associated with the UL transmissions may be controlled based on the determined priority order. The priority order of the UL transmission of an SL-HARQ-ACK and another UL transmission in the NR may be determined based on at least one of a) to i) illustrated below. Hereinafter, "another UL transmission" may be one of a Uu-UCI (for example, a PUCCH or a PUSCH), a PUSCH (for example, with no Uu-UCI)), a PRACH, or an SRS.

a) upper layer parameter
b) PHY layer SL priority
c) PHY layer UL priority
d) upper layer SL priority
e) upper layer UL priority
f) UL channel or signal
g) SL scheduling type
h) UL scheduling type
i) scheduling timing

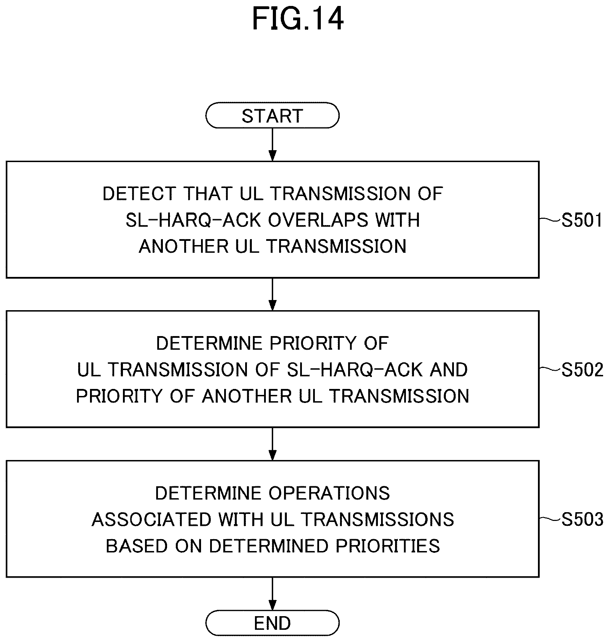

FIG. 14 is a flowchart illustrating an example of a transmission operation according to an embodiment of the present invention. At step S501, the terminal 20 detects that UL transmission of an SL-HARQ-ACK overlaps with another UL transmission. Then, the terminal 20 determines the priority of the UL transmission of an SL-HARQ-ACK and the priority of another UL transmission (S502). Then, the terminal 20 determines an operation associated with the UL transmissions based on the priorities determined at step S502 (S503). Note that step S502 may be performed before step S501.

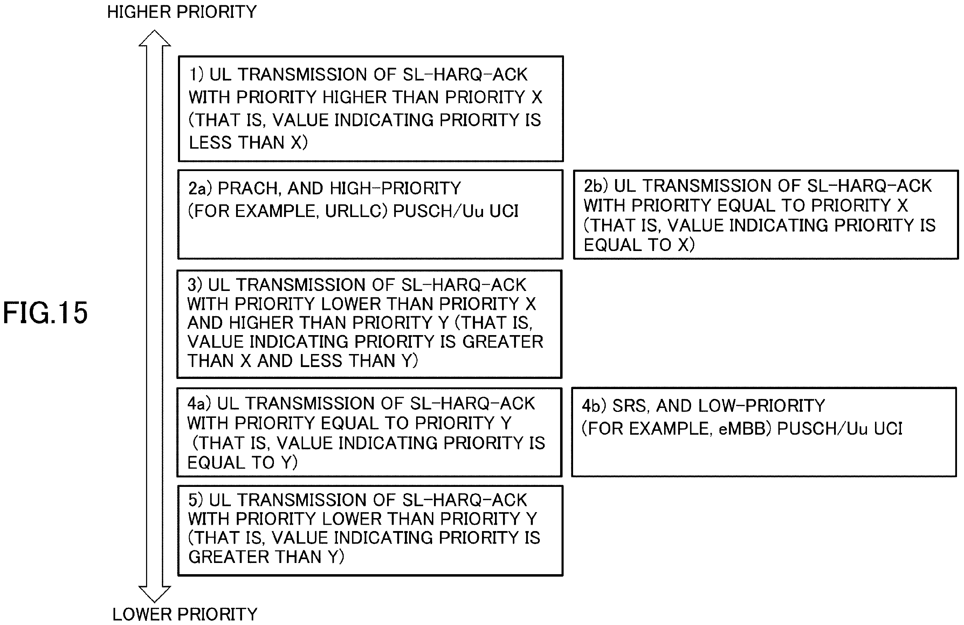

FIG. 15 is a diagram illustrating an example priority order according to an embodiment of the present invention. The priority order may be determined based on parameters X and Y indicative of priorities in SL transmission. The value of parameter X may be less than the value of parameter Y, and in other words, may mean that the priority indicated by the parameter X is higher than the priority indicated by the parameter Y. The parameters X and Y may be upper layer parameters or parameters of the PHY layer.

Also, the priority of UL transmission of an SL-HARQ-ACK may be configured, and the priority of UL transmission may be configured. The priority of UL transmission of an SL-HARQ-ACK and the priority of UL transmissions may be indicated in an upper layer or a PHY layer. For example, the value indicative of the priority of UL transmission of an SL-HARQ-ACK may be configured to a value: that is less than parameter X (that is, a priority higher than the priority indicated by the parameter X); that is greater than or equal to the parameter X and less than parameter Y (that is, a priority less than or equal to the priority indicated by the parameter X and higher than the priority indicated by the parameter Y) ; that is greater than or equal to the parameter Y (that is, a priority lower than or equal to the priority indicated by the parameter Y); or the like. For example, the priority of UL transmissions may be configured such that a PRACH and a URLLC (Ultra Reliable Low Latency) PUSCH/PUCCH are "high" and an SRS (Sounding Reference Signal) and an eMBB (enhanced Mobile Broadband) PUSCH/PUCCH is "low". Note that the terminologies "greater than or equal to" and "less than or equal to" may be replaced with "larger (higher) than" and "smaller (lower) than", respectively. Hereinafter, "priority X" may mean parameter X or the priority indicated by the parameter X. Also, "priority Y" may mean parameter Y or the priority indicated by the parameter Y.

At step S502 illustrated in FIG. 14, as illustrated in FIG. 15, "the UL transmission of an SL-HARQ-ACK with priority higher than priority X (that is, a value indicating the priority is less than X)" may be determined as the highest priority.

As illustrated in FIG. 15, transmission with the next highest priority to "UL transmission of an SL-HARQ-ACK with priority higher than priority X" may be "a PRACH and a high-priority (for example, URLLC) PUSCH/Uu-UCI". Note that "a PUSCH/Uu-UCI" may mean transmission of at least one of a PUSCH and a Uu-UCI. Additionally, "a PRACH and a high priority (for example, URLLC) PUSCH/Uu-UCI" and "UL transmission of an SL-HARQ-ACK with the same priority as priority X (that is, a value indicating the priority is the same as X)" may have the same priority.

As illustrated in FIG. 15, transmission with the next highest priority to "a PRACH and a high priority (for example, a URLLC) PUSCH/Uu-UCI" may be "UL transmission of an SL-HARQ-ACK with a priority lower than priority X and higher than priority Y (that is, a value indicating the priority is greater than X and less than Y)".

As illustrated in FIG. 15, transmission with the next highest priority to "UL transmission of an SL-HARQ-ACK with a priority lower than priority X and higher than priority Y (that is, a value indicating the priority is greater than X and less than Y)" may be "UL transmission of an SL-HARQ-ACK with the same priority as priority Y (that is, a value indicating the priority is the same as Y)". Furthermore, "UL transmission of an SL-HARQ-ACK with a priority lower than priority X and higher than priority Y (that is, a value indicating the priority is greater than X and less than Y)" and "a SRS (Sounding Reference Signal) and a low priority (for example, eMBB) PUSCH/Uu-UCI" may have the same priority.

As illustrated in FIG. 15, transmission with the next highest priority to "a SRS (Sounding Reference Signal) and a low priority (for example, eMBB) PUSCH/PUCCH" may be "UL transmission of an SL-HARQ-ACK with priority lower than priority Y (that is, a value indicating the priority is greater than Y)".

Hereinafter, an operation, in which UL transmission of an SL-HARQ-ACK is compared to another UL transmission based on the priorities illustrated in FIG. 15 at least once and which of the transmissions should be prioritized is determined, is referred to as "operation A1 associated with priority order".

In addition to the priority order illustrated in FIG. 15, in a case where parameter X is not configured, "a PRACH and a high priority (for example, URLLC) PUSCH/Uu-UCI" may be always prioritized. Hereinafter, this operation is referred to as "operation A2 associated with priority order".

In addition to the priority order illustrated in FIG. 15, in a case where parameter Y is not configured, the priority of "UL transmission of an SL-HARQ-ACK having a lower priority than priority X (that, is, a value indicating the priority is greater than X)" may be always determined to be low. Hereinafter, this operation is referred to as "operation A3 associated with priority order".

In addition to the priority order illustrated in FIG. 15, in a case where neither parameter X nor parameter Y is configured, one of UL transmission of an SL-HARQ-ACK, a Uu-UCI, a PUSCH or a PRACH may be always prioritized. Hereinafter, this operation is referred to as "operation A4 associated with priority order".

The priority of UL transmission of an SL-HARQ-ACK and the priority of another UL transmission may be priorities indicated in a PHY layer or an upper layer. Hereinafter, this operation is referred to as "operation A5 associated with priority order".

The priority of SL transmission to which an SL-HARQ-ACK corresponds may be a priority indicated in the corresponding SCI or a priority indicated in MAC-PDU (Medium Access Control-Protocol Data Unit). Hereinafter, this operation is referred to as "operation A5 associated with priority order".

Besides the priority order illustrated in FIG. 15, the priority may be provided to a specific channel or signal, based on a different rule. Hereinafter, this operation is referred to as "operation A6 associated with priority order". For example, a PRACH may be always prioritized. For example, an Aperiodic-CSI or a PUSCH that is not accompanied with a Uu-UCI, may be always provided with the same priority as that of an SL-HARQ-ACK. For example, the priority of a PUCCH/PUSCH that is accompanied with an SR/CSI and/or is not accompanied with a UL-SCH, may be always determined to be low. For example, the priority of an SRS may be always determined to be low.

In a case where parameters X and Y indicative of priorities are upper layer parameters, they may be configured as common to a parameter indicative of an SL or UL priority, or may be separately configured. Hereinafter, this operation is referred to as "operation A7 associated with priority order".

An operation of performing at least one of the above "operation A1 associated with priority order", "operation A2 associated with priority order", "operation A3 associated with priority order", "operation A4 associated with priority order", "operation A5 associated with priority order", "operation A6 associated with priority order", and "operation A7 associated with priority order" is referred to as "operation A associated with priority order".

Determination of priorities as described above, allows the priorities to be flexibly configured depending on traffic types of UL transmission of an SL-HARQ-ACK and another UL transmission or depending on a configured parameter. Also, the priority of UL transmission can be configured based on importance of the traffic type depending on communication states.

Also, one of an SL-HARQ-ACK, a Uu-UCI, a PUSCH, and an SRS, may be prioritized, the one whose corresponding DCI being the latest in a time direction. With respect to only specific channels or signals, one of the specific channels or signals whose corresponding DCI is the latest in a time direction may be prioritized. Hereinafter, this operation is referred to as "operation B associated with priority order".

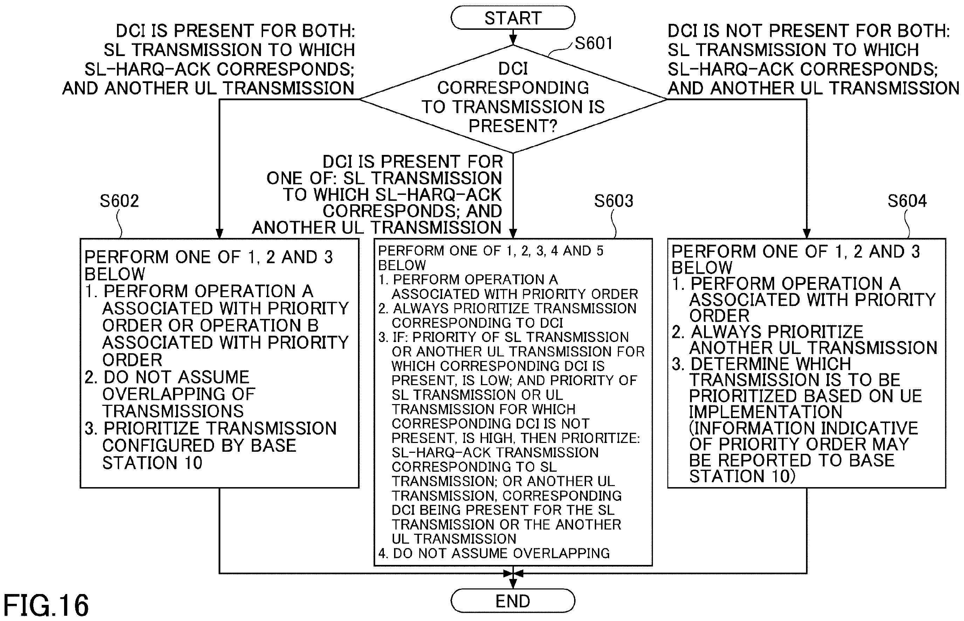

FIG. 16 is a flowchart illustrating an example operation (1) associated with determination of the priority order according to an embodiment of the present invention. The operation associated with determination of the priority order may be controlled depending on whether a corresponding DCI is present for the SL transmission to which an SL-HARQ-ACK corresponds or for another UL transmission. The operation illustrated in FIG. 16 is referred to as "operation C associated with priority order".

At step S601, the terminal 20 proceeds to step S602 in a case where the DCI corresponding to transmission is present for both SL transmission corresponding to an SL-HARQ-ACK and another UL transmission, proceeds to step 603 in a case where the DCI corresponding to transmission is present for either SL transmission corresponding to an SL-HARQ-ACK or another UL transmission, and proceeds to step S604 in a case where the DCI corresponding to transmission is present for none of SL transmission corresponding to an SL-HARQ-ACK and another UL transmission.

For example, "the DCI corresponding to transmission is included" may correspond to: transmission according to DCI with a dynamic grant; or transmission according to DCI with an activation or a deactivation of configured grant type 2. The transmission corresponding to the DCI with the activation of configured grant type 2, may be transmission where only a first resource of periodically allocated resources is used. The transmission corresponding to the DCI with the deactivation of configured grant type 2, may be transmission of an acknowledge to the deactivation, for example.

At step S602, the terminal 20 may perform one of 1) to 3) below.
1) perform operation A associated with priority order and/or operation B associated with priority order
2) do not assume overlapping of transmissions
3) prioritize transmission configured by the base station 10

At step S603, the terminal 20 may perform one of 1) to 5) below.
1) perform operation A associated with priority order
2) always prioritize transmission corresponding to the DCI
3) in a case where the priority of SL transmission or another UL transmission is low, the corresponding DCI being present for the SL transmission or another UL transmission, and where the priority of SL transmission or another UL transmission is high, the corresponding DCI being not present for the SL transmission or another UL transmission, transmission of an SL-HARQ-ACK corresponding to the SL transmission or another UL transmission, for which the corresponding DCI is present, is prioritized
4) do not assume overlapping

At step S604, the terminal 20 may perform one of 1) to 3) below.
1) perform operation A associated with priority order
2) always prioritize another UL transmission
3) determine which transmission should be prioritized based on UE implementation (information indicative of priority order may be reported to the base station 10)

Note that the condition for performing the above step S602, "in a case where the DCI is present for both SL transmission corresponding to an SL-HARQ-ACK, and another UL transmission" may be replaced with "in a case where SL transmission corresponding to an SL-HARQ-ACK and UL transmission are scheduled by a dynamic grant".

Note that the condition for performing the above step S603, "in a case where the DCI is present for either SL transmission corresponding to an SL-HARQ-ACK or UL transmission" may be replaced with "in a case where only either SL transmission corresponding to an SL-HARQ-ACK or UL transmission is scheduled by a dynamic grant".

Note that the condition for performing the above step S704 "in a case where the DCI is not present for both SL transmission corresponding to an SL-HARQ-ACK and UL transmission" may be replaced with "in a case where SL transmission corresponding to an SL-HARQ-ACK or UL transmission has been configured by configured grant type 1 or configured grant type 2".

As stated above, the operations associated with determination of priority order are performed depending on presence or absence of the DCI corresponding to transmission, and the operations associated with determination of priority order are switched based on the cases where control by the base station 10 is easy or not, which can achieve efficient communication.

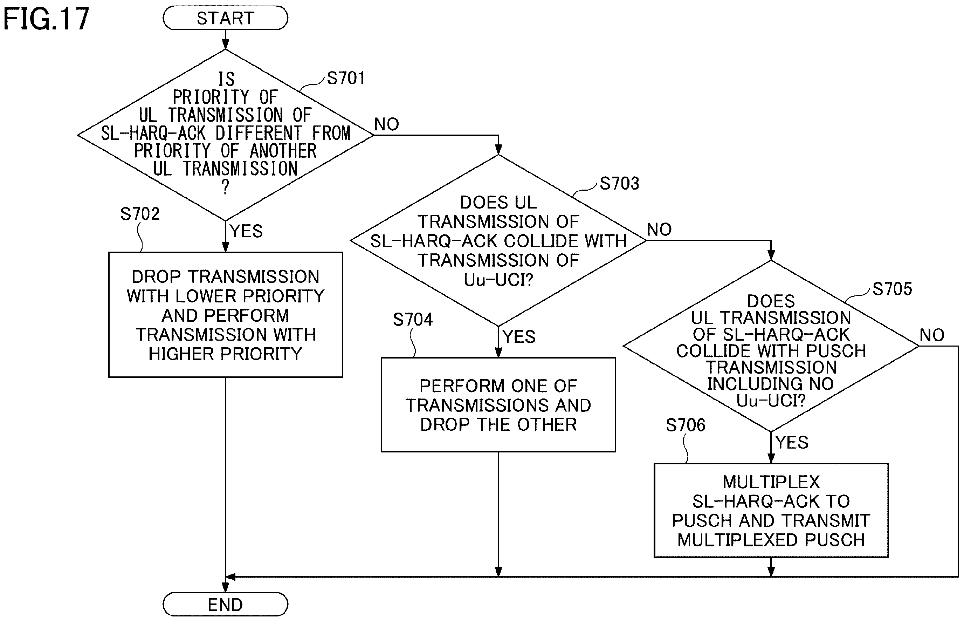

FIG. 17 is a flowchart illustrating an example operation (2) associated with determination of the priority order according to an embodiment of the present invention. In a case where UL transmission of an SL-HARQ-ACK collides with other transmissions that are a Uu-UCI, and a PUSCH/PRACH/SRS, whether the SL-HARQ-ACK is to be multiplexed with other UL transmissions or whether some transmissions are to be dropped, may be determined based on the priorities. The operation illustrated in FIG. 17 is referred to as "operation D associated with priority order".

At step S701, the terminal 20 determines whether the priority of UL transmission of an SL-HARQ-ACK is different from the priority of another UL transmission. In a case where the priorities are different (YES at S701), the terminal 20 proceeds to step S702, and in a case where the priorities are the same (NO at S701), the terminal 20 proceeds to step S703.

At step S702, the terminal 20 drops transmission with a lower priority and performs transmission with a higher priority, and the flow ends. At step S703, on the other hand, whether UL transmission of an SL-HARQ-ACK collides with transmission of a Uu-UCI, is determined. In a case where the UL transmission of an SL-HARQ-ACK collides with transmission of a Uu-UCI, a PRACH or an SRS (YES at S703), the terminal 20 proceeds to step S704, and in a case where the UL transmission of an SL-HARQ-ACK does not collide with transmission of a Uu-UCI (NO at S703), the terminal 20 proceeds to step S705.

At step S704, the terminal 20 performs one of the transmissions and drops the other, and the flow ends. At step S705, on the other hand, the terminal 20 determines whether the UL transmission of an SL-HARQ-ACK collides with PUSCH transmission without including an Uu-UCI. In a case where the UL transmission of an SL-HARQ-ACK collides with PUSCH transmission without including an Uu-UCI (YES at S705), the terminal 20 proceeds to step S706, and in a case where the UL transmission of an SL-HARQ-ACK does not collide with PUSCH transmission without including an Uu-UCI (NO at S705), the flow ends.

At step S706, the terminal 20 multiplexes the SL-HARQ-ACK with a PUSCH and transmits the multiplexed PUSCH, and the flow ends.

As described above, in a case where the UL transmission of an SL-HARQ-ACK collides with another UL transmission, such as a Uu-UCI, or a PUSCH/PRACH/SRS, the operations are switched based on the priorities, thereby terminal's operations are clarified.

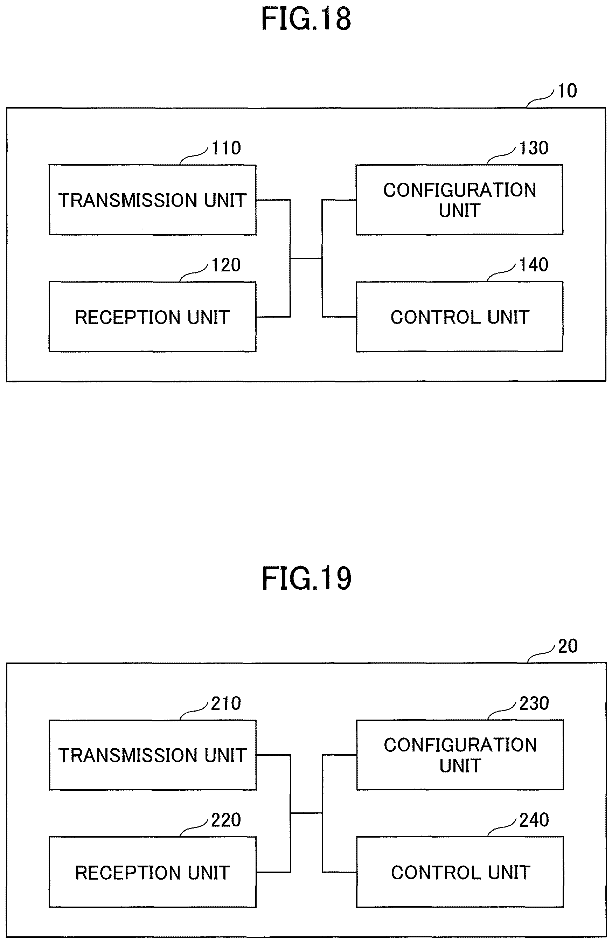

Also, in a case where the UL transmission of an SL-HARQ-ACK collides with another UL transmission such as a Uu-UCI or a PUSCH/PRACH/SRS, the terminal 20 may perform an operation as an error case. The operation illustrated in FIG. 18 is referred to as "operation E associated with priority order".

Note that utilization of one of "operation A associated with priority order", "operation B associated with priority order", "operation C associated with priority order", "operation D associated with priority order" and "operation E associated with priority order" or combinations thereof may be configured by an upper layer parameter.

Note that UL transmission and SL transmission corresponding to UL transmission of an SL-HARQ-ACK, may be performed in the same carrier or different carriers.

Note that the carrier of UL transmission of an SL-HARQ-ACK and the carrier of another UL transmission such as a Uu-UCI or a PUSCH/PRACH/SRS, may be the same or different.

Note that the above-stated embodiments are not limited to V2X terminals and can be applied to all terminals 20 that support sidelink.

According to the above-stated embodiments, in a case where UL transmission carrying an SL-HARQ-ACK overlaps with UL transmission, the terminal 20 can determine the priority order of transmissions, based on a parameter and a communication configuration, flexibly to improve communication efficiency.

In other words, operations associated with transmission in a case where multiple transmissions overlap with each other, can be determined in a radio communication system.

### (Device Arrangement)

Next, example functional arrangements of the base station 10 and the terminal 20 that perform operations and actions as stated above are described. The base station 10 and the terminal 20 include functions of implementing the above-stated embodiments. Note that the base station 10 and the terminal 20 each may have only a portion of the functions of the embodiments.

### <Base station 10>

FIG. 18 illustrates an example functional arrangement of the base station 10. As shown in FIG. 18, the base station 10 includes a transmission unit 110, a reception unit 120, a configuration unit 130 and a control unit 140. The functional arrangement shown in FIG. 18 is only one example. The functional separation and the names of the functional units may be arbitrary as long as operations according to the present embodiment can be achieved.

The transmission unit 110 includes a function of generating a signal for transmission to the side of the terminal 20 and wirelessly transmitting the signal. The reception unit 120 includes a function of receiving various signals transmitted from the terminal 20 and acquiring information for upper layers from the received signals, for example. Also, the transmission unit 110 includes a function of transmitting an NR-PSS, an NR-SSS, an NR-PBCH, a DL/UL control signal, a DL reference signal or the like to the terminal 20.

The configuration unit 130 stores preconfigured configurations and various configurations for transmission to the terminal 20 in a memory device and reads them from the memory device as needed. Contents of the configurations may be information associated with configurations of D2D information or the like, for example.

The control unit 140 performs operations associated with configurations for the terminal 20 to perform D2D communication as stated in conjunction with the embodiments. Also, the control unit 140 transmits a scheduling for D2D communication and DL communication to the terminal 20 via the transmission unit 110. Also, the control unit 140 receives information associated with an HARQ acknowledgement for D2D communication and DL communication from the terminal 20 via the reception unit 120. The functional portions of the control unit 140 related to signal transmission may be included in the transmission unit 110, and the functional portions of the control unit 140 related to signal reception may be included in the reception unit 120.

### <Terminal 20>

FIG. 19 is a diagram illustrating one example functional arrangement of the terminal 20 according to an embodiment of the present invention. As illustrated in FIG. 19, the terminal 20 has a transmission unit 210, a reception unit 220, a configuration unit 230 and a control unit 240. The functional arrangement shown in FIG. 19 is only one example. The functional separation and the names of the functional units may be arbitrary as long as operations according to the present embodiment can be achieved.

The transmission unit 210 generates a transmission signal from transmission data and wirelessly transmits the transmission signal. The reception unit 220 wirelessly receives various signals and acquires signals for upper layers from the received physical layer signals. Also, the reception unit 220 has a function of receiving an NR-PSS, an NR-SSS, an NR-PBCH, a DL/UL/SL control signal or a reference signal and so on transmitted from the base station 10. Also, for example, as D2D communication, the transmission unit 210 transmits a PSCCH (Physical Sidelink Control Channel), a PSSCH (Physical Sidelink Shared Channel), a PSDCH (Physical Sidelink Discovery Channel), a PSBCH (Physical Sidelink Broadcast Channel) or the like to other terminals 20, and the reception unit 220 receives the PSCCH, the PSSCH, the PSDCH, the PSBCH or the like from other terminals 20.

The configuration unit 230 stores various configurations received at the reception unit 220 from the base station 10 or the terminal 20 in a memory device and reads them from the memory device as needed. Also, the configuration unit 230 stores preconfigured configurations. Contents of the configurations may be information associated with configuration of D2D communication and so on, for example.

The control unit 240 controls D2D communication to other terminals 20 as stated above in conjunction with the embodiments. Also, the control unit 240 performs operations associated with an HARQ for D2D communication and DL communication. Also, the control unit 240 transmits information associated with an HARQ acknowledgement for D2D communication and DL communication to other terminal 20 scheduled from the base station 10 to the base station 10. Also, the control unit 240 may perform scheduling for D2D communication for other terminals 20. Also, the control unit 240 may autonomously select a resource for use in D2D communication from a resource selection window. Also, the control unit 240 controls contention of UL transmission and SL transmission. The functional portion of the control unit 240 regarding signal transmission may be included in the transmission unit 210, and the functional portion of the control unit 240 regarding signal reception may be included in the reception unit 220.

### (Hardware arrangement)

The block diagrams (FIGS. 18 and 19) used in describing the above embodiments show blocks of functional units. These functional blocks (components) are implemented by any combination of at least one of hardware and software. In addition, the implementation method of each function block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

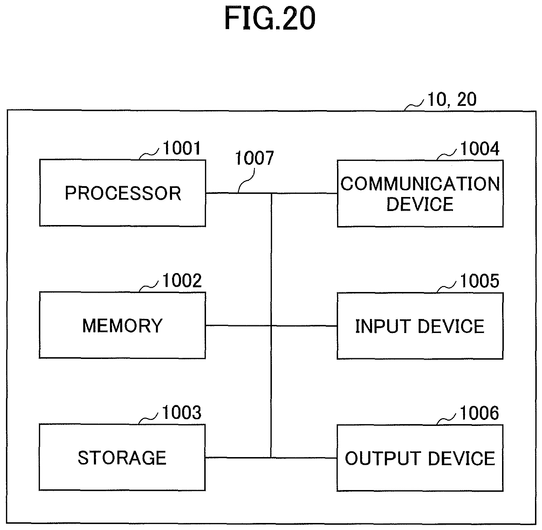

For example, each of the base station 10, the terminal 20 and so on according to one embodiment of the present invention may function as a computer performing operations for a radio communication method according to the present disclosure. FIG. 20 is a diagram illustrating an example of a hardware configuration of the base station 10 and the terminal 20 according to one embodiment of the present disclosure. The base station 10 and the terminal 20 as stated above may be physically configured as a computer device including a processor 1001, a memory 1002, a storage 1003, a communication device 1004, an input device 1005, an output device 1006, a bus 1007, etc.

In the following description, the term "device" can be read as a circuit, a device, a unit, etc. The hardware configuration of the base station 10 and the terminal 20 may be configured to include one or more of the respective devices shown in the figure, or may be configured without some devices.

Each function of the base station 10 and the terminal 20 may be implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, the above-stated control units 140 and 240 or the like may be implemented with the processor 1001.

Additionally, the processor 1001 reads a program (program code), a software module, data, etc., from at least one of the storage 1003 and the communication device 1004 to the memory 1002, and executes various processes according to these. As the program, a program is used which causes a computer to execute at least a part of the operations described in the above-described embodiment. For example, the control unit 140 of the base station 10 shown in FIG. 18 may be implemented by a control program that is stored in the memory 1002 and that is operated by the processor 1001. Also, for example, the control unit 240 of the terminal 20 shown in FIG. 19 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a ROM (Read Only Memory), an EPROM (Erasable Programmable ROM), an EEPROM (Electrically Erasable Programmable ROM), a RAM (Random Access Memory), etc. The memory 1002 may be referred to as a register, a cache, a main memory (main storage device), etc. The memory 1002 may store a program (program code), a software module, etc., which can be executed for implementing the radio communication method according to one embodiment of the present disclosure.

The storage 1003 is a computer readable storage medium and may be formed of, for example, at least one of an optical disk, such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, etc. The communication device 1004 may be configured to include, for example, a high frequency switch, a duplexer, a filter, a frequency synthesizer, etc., to implement at least one of frequency division duplex (FDD: Frequency Division Duplex) and time division duplex (TDD: Time Division Duplex). For example, a transceiver antenna, an amplification unit, a transceiver unit, a channel interface or the like may be implemented with the communication device 1004. The transceiver unit may have an implementation with the transmission unit and the reception unit that are physically or logically separated.

The input device 1005 is an input device (e.g., a keyboard, a mouse, a microphone, a switch, a button, a sensor, etc.) that receives an external input. The output device 1006 is an output device (e.g., a display, speaker, LED lamp, etc.) that performs output toward outside. The input device 1005 and the output device 1006 may be configured to be integrated (e.g., a touch panel).

Each device, such as processor 1001 and memory 1002, is also connected by the bus 1007 for communicating information. The bus 1007 may be formed of a single bus or may be formed of different buses between devices.

Also, the base station 10 and the terminal 20 may include hardware, such as a microprocessor, a digital signal processor (DSP: Digital Signal Processor), an ASIC (Application Specific Integrated Circuit), a PLD (Programmable Logic Device), and a FPGA (Field Programmable Gate Array), which may implement some or all of each functional block. For example, the processor 1001 may be implemented using at least one of these hardware components.

### (Conclusion of the embodiments)

As stated above, according to an embodiment of the present invention, there is provided a terminal, comprising: a control unit configured to determine, in a case where a first transmission of transmitting an HARQ (Hybrid Automatic Repeat Request) response received from another terminal to a base station overlaps in at least in a time domain with a second transmission to the base station, at least one of a priority and a priority order, of each transmission, and to determine control associated with the first transmission and the second transmission, based on the priorities; and a transmission unit configured to perform the control associated with the first transmission and the second transmission, based on the determination, wherein the control unit changes control associated with determination of priority order of transmissions, based on a configuration associated with communication.

According to the above arrangement, in a case where UL transmission carrying an SL-HARQ-ACK overlaps with UL transmission, the terminal 20 can determine the priority order of transmissions flexibly based on a parameter and a communication configuration to improve communication efficiency. In other words, an operation associated with transmission in a case where multiple transmissions overlap with each other, can be determined in a radio communication system.

The configuration associated with communication may include a priority of the first transmission, a priority of the second transmission and one or more parameters indicative of the priority of the first transmission. According to this arrangement, in a case where UL transmission carrying an SL-HARQ-ACK overlaps with UL transmission, the terminal 20 can determine the priority order of transmissions flexibly, based on a parameter and a communication configuration to improve communication efficiency.

The terminal as claimed in claim 2, wherein the one or more parameters include a first parameter and a second parameter having a lower priority than the first parameter, the priority of the second transmission includes a first priority and a second priority lower than the first priority, and the control unit determines that transmission priorities decrease in an order listed in 1) to 5) below,
1) the first transmission having a higher priority than the first parameter;
2) the second transmission having the first priority and the first transmission having a same priority as the first parameter;
3) the first transmission having a priority lower than the first parameter and higher than the second parameter;
4) the first transmission having a same priority as the second parameter and the second transmission having the second priority; and
5) the first transmission having a lower priority than the second parameter.

According to this arrangement, in a case where UL transmission carrying an SL-HARQ-ACK overlaps with UL transmission, the terminal 20 can determine the priority order of transmissions flexibly, based on a parameter and a communication configuration to improve communication efficiency.

The configuration associated with communication may include presence or absence of downlink control information corresponding to the first transmission or the second transmission. According to this arrangement, in a case where UL transmission carrying an SL-HARQ-ACK overlaps with UL transmission, the terminal 20 can determine the priority order of transmissions flexibly, based on a parameter and a communication configuration to improve communication efficiency.

The control associated with transmission drops a transmission having a low priority and performs a transmission having a high priority, and in a case where the priority of the first transmission and the priority of the second transmission are same, controls an operation based on a type of the second transmission. According to this arrangement, in a case where UL transmission carrying an SL-HARQ-ACK overlaps with UL transmission, the terminal 20 can determine the priority order of transmissions flexibly, based on a parameter and a communication configuration to improve communication efficiency.

Also, according to an embodiment of the present invention, there is provided a communication method implemented by a terminal, comprising: determining, in a case where a first transmission of transmitting an HARQ (Hybrid Automatic Repeat Request) response received from another terminal to a base station overlaps in at least in a time domain with a second transmission to the base station, which of the transmissions is to be prioritized; and performing transmission control for the first transmission and the second transmission, based on the determination, wherein the determining includes changing control associated with determination of priority order of transmissions, based on a configuration associated with communication.

According to the above arrangement, in a case where UL transmission carrying an SL-HARQ-ACK overlaps with UL transmission, the terminal 20 can determine the priority order of transmissions flexibly, based on a parameter and a communication configuration to improve communication efficiency. In other words, a transmission that is to be prioritized in a case where multiple transmissions overlap with each other, can be determined in a radio communication system.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an example order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. However, the other network node may be a combination of a plurality of other network nodes (for example, an MME and a S-GW).

Information, signals, or the like described in the present disclosure may be output from an upper layer (or a lower layer) to a lower layer (or an upper layer). Information, signals, or the like described in the present disclosure may be input and output via a plurality of network nodes.

Information or the like that has been input or output may be stored at a predetermined location (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station 10. In this regard, a word such as "up" or "down" may be replaced with a word corresponding to communication between terminals (for example, "side") . For example, an uplink channel, a downlink channel, or the like may be replaced with a side channel.

Similarly, a user terminal according to the present disclosure may be read as a base station. In this case, a base station may have above-described functions of the user terminal.

The term "determining" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "Determining" may be read as "assuming", "expecting", "considering", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the conventional LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to allocate, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource allocation unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

Note that UL transmission of an SL-HARQ-ACK of the present disclosure is an example of the first transmission. Another UL transmission is an example of the second transmission. The parameter X is an example of the first parameter. The parameter Y is an example of the second parameter. The DCI is an example of downlink control information.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### LIST OF REFERENCE SYMBOLS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Memory
- 1003: Storage
- 1004: Communication device
- 1005: Input device
- 1006: Output device

## Claims

1. A terminal, comprising:
a control unit configured to determine, in a case where a first transmission of transmitting an HARQ (Hybrid Automatic Repeat Request) response received from another terminal to a base station overlaps in at least in a time domain with a second transmission to the base station, at least one of a priority and a priority order, of each transmission, and to determine control associated with the first transmission and the second transmission, based on the priorities; and
a transmission unit configured to perform the control associated with the first transmission and the second transmission, based on the determination,
wherein the control unit changes control associated with determination of priority order of transmissions, based on a configuration associated with communication.

2. The terminal as claimed in claim 1, wherein the configuration associated with communication includes a priority of the first transmission, a priority of the second transmission, and one or more parameters indicating the priority for the first transmission.

3. The terminal as claimed in claim 2, wherein the one or more parameters include a first parameter and a second parameter having a lower priority than the first parameter, the priority of the second transmission includes a first priority and a second priority lower than the first priority, and the control unit determines that transmission priorities decrease in an order listed in 1) to 5) below,
1) the first transmission having a higher priority than the first parameter;
2) the second transmission having the first priority and the first transmission having a same priority as the first parameter;
3) the first transmission having a priority lower than the first parameter and higher than the second parameter;
4) the first transmission having a same priority as the second parameter and the second transmission having the second priority; and
5) the first transmission having a lower priority than the second parameter.

4. The terminal as claimed in claim 1, wherein the configuration associated with communication includes presence or absence of downlink control information corresponding to the first transmission or the second transmission.

5. The terminal as claimed in any one of claims 1 to 4, wherein the control associated with transmission drops a transmission having a low priority and performs a transmission having a high priority, and, in a case where the priority of the first transmission and the priority of the second transmission are same, controls an operation based on a type of the second transmission.

6. A communication method implemented by a terminal, the communication method comprising:
determining, in a case where a first transmission of transmitting an HARQ (Hybrid Automatic Repeat Request) response received from another terminal to a base station overlaps in at least in a time domain with a second transmission to the base station, at least one of a priority and a priority order, of each transmission; and
performing transmission control for the first transmission and the second transmission, based on the determination,
wherein the determining includes changing control associated with determination of priority order of transmissions, based on a configuration associated with communication.
